# EUROPÄISCHE PATENTSCHRIFT

(11) **EP 1 947 422 B1**
(45) Veröffentlichungstag und Bekanntmachung des Hinweises auf die Patenterteilung: **23.11.2011**
(21) Anmeldenummer: 07001132.5
(22) Anmeldetag: 19.01.2007
(51) Int. Cl.: G01D 3/02, G01D 5/244, G08C 15/06

(54) **Verfahren und Vorrichtung zur Parametrierung einer Messeinrichtung**
Procedure and device for the parameterization of a sensor
Procédé et appareil pour paramétrer un dispositif de mesure

(43) Veröffentlichungstag der Anmeldung: 23.07.2008
(73) Patentinhaber: SICK STEGMANN GmbH, 78166 Donaueschingen (DE)
(72) Erfinder: Stobbe, Willibald, 78166 Donaueschingen (DE); Siraky, Josef, 78166 Donaueschingen (DE); Steinmann, Ralf, 78166 Donaueschingen (DE)
(74) Vertreter: Patentanwälte Westphal, Mussgnug & Partner

(56) Entgegenhaltungen:
- EP-A1- 0 790 489
- EP-A1- 0 845 660
- EP-A1- 0 866 391
- DE-A1- 4 129 577
- DE-A1- 4 342 377
- DE-A1- 19 521 252
- JP-A- 11 259 408
- US-A- 5 451 939
- US-A- 6 088 514

## Beschreibung

Die Erfindung betrifft ein Verfahren zur Parametrierung einer Messeinrichtung gemäß dem Oberbegriff des Patentanspruchs 1.

Messeinrichtungen erfassen Messwerte, z. B. positionsabhängige Messwerte, wie Position, Geschwindigkeit, Beschleunigung und dergleichen, wobei die Messwerte als inkrementale oder absolute Messwerte und in digitaler oder analoger Form zur Verfügung stehen können. Die Messwerte werden von der Messeinrichtung über Datenleitungen an Verarbeitungseinheiten übertragen, die die Messwerte auswerten und verarbeiten. Um die Messwerte der Messeinrichtung in der Verarbeitungseinheit verarbeiten zu können, ist es in der Regel notwendig, Parameter der Messeinrichtung mit der Verarbeitungseinheit abzustimmen. Solche Parameter können z. B. Messschritte, Impulszahlen, Dreh- oder Bewegungsrichtung, Justagewerte oder dergleichen sein. Diese Parameter werden in einem Speicher der Messeinrichtung abgelegt.

Es ist bekannt, die Parametrierung der Messeinrichtung bereits bei der Fertigung der Messeinrichtung vorzunehmen, sofern die Messeinrichtung ausschließlich für eine bestimmte Anwendung vorgesehen ist. Soll die Parametrierung jedoch unterschiedlichen Anwendungen angepasst werden, so erfolgt die Parametrierung über eine spezielle Ausbildung der Schnittstelle zwischen der Messeinrichtung und der Auswerteeinheit (z.B. EP 0 866 391 A1) oder gegebenenfalls über eine spezielle Steckverbindung.

Der Erfindung liegt die Aufgabe zugrunde, eine Parametrierung eines Messeinrichtung ohne eine spezielle Ausgestaltung der Schnittstelle und ohne zusätzliche Leitungen zu ermöglichen.

Diese Aufgabe wird erfindungsgemäß gelöst durch ein Verfahren mit den Merkmalen des Patentanspruchs 1.

Vorteilhafte Ausführungen der Erfindung sind in den jeweils rückbezogenen Unteransprüchen angegeben.

Der Gedanke der Erfindung besteht darin, die zur Übertragung der Messwerte vorhandenen Datenleitungen auch zur Parametrierung der Messeinrichtung und zum Austausch der Parameter zwischen der Messeinrichtung und der Auswerteeinheit zu verwenden. Hierzu wird die für die Parametrierung verwendete Datenleitung mit einer sogenannten Tristate- oder Disable-Funktion ausgestattet, d. h. diese Datenleitung kann für die Übertragung der Messwerte hochohmig geschaltet werden. Diese Datenleitung wird für ein definiertes Zeitintervall hochohmig geschaltet, so dass die Datenleitung von der Messeinrichtung getrennt ist. In diesem Zeitintervall wird geprüft, ob auf dieser Datenleitung Parametrierungssignale der Auswerteeinheit anstehen. Falls solche Parametrierungssignale anstehen, werden diese von der Messeinrichtung empfangen und gegebenenfalls in dem Speicher der Messeinrichtung abgelegt. Falls keine Parametriersignale anstehen oder sobald die Übernahme der Parametriersignale abgeschlossen ist, wird die entsprechende Datenleitung wieder niederohmig durchgeschaltet, so dass die Messwerte der Messeinrichtung über diese Datenleitung übertragen werden können.

Die Erfindung ermöglicht es somit, die Parametrierung über die vorhandenen Datenleitungen und die vorhandenen Schnittstellen bzw. Steckverbinder durchzuführen. Die Parametrierung kann somit vielseitig und individuell entsprechend den Anforderungen der Anwendung durchgeführt werden, wobei der Aufwand hierfür äußerst gering ist.

Aus der DE 195 21 252 C2 ist es an sich bereits bekannt, die Datenleitungen von Messeinrichtungen mit einer Tristate-Funktion hochohmig zu schalten. Die Tristate-Funktion wird jedoch dazu verwendet, mehrere Messeinrichtungen an einen gemeinsamen Datenbus anschließen zu können oder Störungen ausschalten zu können. Durch die Tristate-Funktion wird dabei nur die Ausgabe von Daten durch die Messeinrichtung verhindert. Die Möglichkeit, über die durch die Tristate-Funktion abgeschaltete Datenleitung die Parametrierung vorzunehmen, ist hieraus nicht bekannt.

In einer bevorzugten Ausführung der Erfindung können die in dem Speicher abgelegten Parameter auch über eine der für die Übertragung der Messwerte vorgesehenen Datenleitungen ausgelesen und zu der Verarbeitungseinheit übertragen werden. Hierzu werden die aus dem Speicher ausgelesenen Parameter anstelle der Messwerte der Messeinrichtung auf diese Datenleitung aufgeschaltet und können somit in gleicher Weise wie die Messwerte auf dieser Datenleitung übertragen werden, wobei der Ausgang dieser Datenleitung in gleicher Weise wie für die Übertragung der Messwerte niederohmig geschaltet wird.

Die Parametrierung erfolgt erfindungsgemäß so, dass beim Einschalten der Messeinrichtung zunächst die entsprechende Datenleitung für eine vorgegebene Zeitdauer hochohmig geschaltet wird. Innerhalb dieser Zeitdauer wird geprüft, ob ein Parametrieranforderungssignal ansteht. Wird ein solches Parametrierungssignal festgestellt, so wird die Vorrichtung in den Parametriermodus geschaltet und die Parametrieranforderungssignale werden übernommen und in an sich bekannter Weise zur Parametrierung verwendet, insbesondere z. B. in dem Speicher abgelegt. Falls in der vorgegebenen Zeitdauer kein Parametrieranforderungssignal ansteht, wird nach Ablauf dieser Zeitdauer die Datenleitung niederohmig geschaltet, so dass die Messeinrichtung in den Betriebszustand geht und die Messwerte übertragen kann. Falls die Vorrichtung in den Parametriermodus geschaltet wird, wird die Beendigung des Parametriermodus und das Umschalten der Datenleitung in den niederohmigen Zustand durch einen mit dem Parametriersignalen übertragenen Befehl beendet.

Im Folgenden wird die Erfindung anhand eines in der Zeichnung dargestellten Ausführungsbeispiels näher erläutert. Es zeigen:
- Figur 1: ein Schaltbild einer Messeinrichtung mit Parametrierung und
- Figur 2: ein Flussdiagramm des Verfahrens zur Parametrierung.

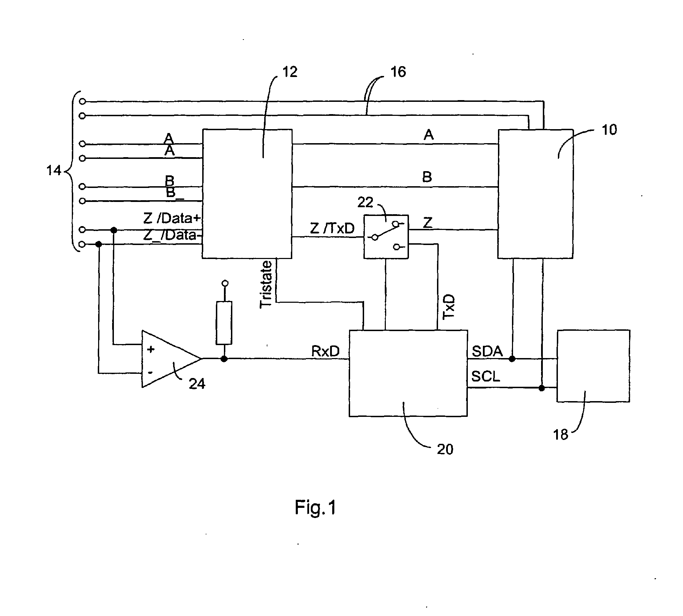

Das Schaltbild der Figur 1 zeigt die wesentlichen Elemente einer Messeinrichtung mit der erfindungsgemäß ausgebildeten Parametrierung.

Die Messeinrichtung weist eine Messwerterfassung 10 auf, die beispielsweise ein Encoder sein kann, der den Drehwinkel eines zu messenden Objektes erfasst. Die Messwerte der Messwerterfassung 10 werden über Datenleitungen A, B und Z einer Ausgabeeinrichtung 12 zugeführt, die insbesondere Treiber aufweist.

Von der Ausgabeeinrichtung 12 werden die Messwerte über Datenleitungen A, A_, B, B_ und Z, Z_ zu einem Stecker 14 geführt, der die Schnittstelle zu einer nicht dargestellten Auswerteeinheit bildet. Über diesen Stecker 14 werden auch die Stromversorgungsleitungen 16 der Messeinrichtung zugeführt. In einem nicht flüchtigen Speicher 18, der insbesondere als EEPROM-Speicher ausgebildet ist, sind Parameter der Messeinrichtung abgelegt, die Aufbau und Funktionsmerkmale der Messeinrichtung charakterisiert, z. B. Impulszahl, Drehrichtung, Justagewerte und dergleichen. Ein Mikrocontroller 20 steuert die Funktion der Messwerterfassung 10 und die Parametrierung der Messwerterfassung 10 entsprechend den in dem Speicher 18 abgelegten Parametern. Insoweit entspricht die Messeinrichtung dem bekannten Stand der Technik, so dass eine detaillierte Beschreibung nicht erforderlich ist.

In eine der Datenleitungen, die von der Messwerterfassung 10 zu der Ausgabeeinrichtung 12 führen, ist ein Schalter 22 eingesetzt. In Figur 1 ist der Schalter 22 beispielsweise in die Datenleitung Z eingesetzt, die das Nullpunkt-Signal des Encoders der Messwerterfassung 10 überträgt. Der Schalter 22 ist durch den Mikrocontroller 20 gesteuert umschaltbar. In einer Stellung des Schalters 22, die in Figur 1 gezeigt ist, verbindet der Schalter 22 die von der Messwerterfassung 10 kommende Datenleitung Z mit der Ausgabeeinrichtung 12. In der anderen Schalterstellung verbindet der Schalter 22 eine von dem Mikrocontroller 20 kommende Sendeleitung TxD mit der Ausgabeeinrichtung 12. Der Schalter 22 kann somit umschaltbar die Datenleitung Z der Messwerterfassung 10 oder die Sendeleitung TxD über den Treiber der Ausgabeeinrichtung 12 an die Datenleitungen Z und Z_ legen.

Weiter kann der Mikrocontroller 20 über eine Leitung "Tristate" die Ausgabeeinrichtung 12 und insbesondere den Treiber der Datenleitung Z von der normalen durchgeschalteten Funktion hochohmig schalten, so dass zumindest die von dem Schalter 22 kommende Datenleitung von den ausgehenden Datenleitungen Z und Z_ getrennt wird.

Schließlich sind die ausgehenden Datenleitungen Z und Z über einen Differenzverstärker 24 und eine Empfangsleitung RxD mit dem Mikrocontroller 20 verbunden.

Die Messeinrichtung der Figur 1 ermöglicht folgende Funktionen:
1. Schaltet der Mikrocontroller 20 die Ausgabeeinrichtung 12 und insbesondere den Treiber der Datenleitung Z niedrigohmig und verbindet der Schalter 22 die von der Messuerterfassung 10 kommende Datenleitung Z mit der Ausgabeeinrichtung 12, so arbeitet die Messeinrichtung im Messbetrieb. Die von der Messwerterfassung 10 erfassten Messwerte werden über die Datenleitungen A, B und Z und die Treiber der Ausgabeeinrichtung 12 jeweils als inverse Signalpaare über die Datenleitungen A und A_, B und B_ sowie Z und Z_ über den Stecker 14 ausgegeben und der Auswerteeinheit zugeführt. Die Messwerte auf den Datenleitungen A und B können dabei beispielsweise um 90° gegeneinander versetzt Inkremental-Signale sein, wobei über die Datenleitung Z ein Nullpunkt-Referenzsignal geführt wird.
2. Schaltet der Mikrocontroller 20 die Ausgabeeinrichtung 12 und insbesondere den Treiber der Datenleitung Z niederohmig und wird der Schalter 22 so geschaltet, dass er die Sendeleitung TxD an die Ausgabeeinrichtung 12 legt, so können in dem Speicher 18 abgelegte Parameter von dem Mikrocontroller 20 ausgelesen und über die Sendeleitung TxD, den Schalter 22, die Ausgabeeinrichtung 12 und die ausgehenden Datenleitungen Z, Z_ ausgegeben und an die Auswerteeinheit übertragen werden. Auf diese Weise können die aktuell in dem Speicher 18 abgelegten Parameter der Auswerteeinheit mitgeteilt werden, womit sich die Messeinrichtung der Auswerteeinheit gegenüber identifiziert.
3. Schaltet der Mikrocontroller 20 über die Leitung "Tristate" die Ausgabeeinrichtung 12 und insbesondere den Treiber der Datenleitung Z hochohmig, so ist die Datenleitung Z von der Messwerterfassung 10 bzw, dem Schalter 22 zu den ausgehenden Datenleitungen Z und Z_ getrennt. Auf diesen ausgehenden Datenleitungen Z und Z_ von der Auswerteeinheit als invertierte Signalpaare kommende Parametrierungssignale können nun über den Differenzverstärker 24 und die Empfangsleitung RxD dem Mirkocontroller 20 zugeführt werden, der diese Signale in den Speicher 18 einlesen und dort ablegen kann. Damit können die in dem Speicher 18 abgelegten und für die Parametrierung der Messwerterfassung 10 zum Einsatz kommenden Parameter den Anforderungen der Auswerteeinheit angepasst werden.

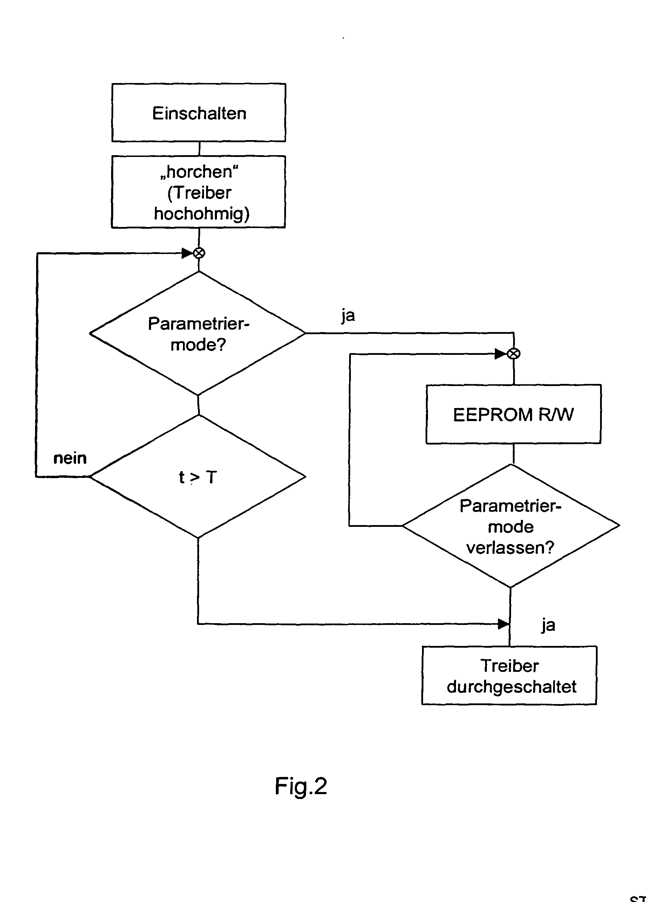

Der Ablauf der Parametrierung ergibt sich aus dem Flussdiagramm der Figur 2.

Beim Einschalten der Messeinrichtung schaltet der Mikrocontroller 20 die Ausgabeeinrichtung 12 hochohmig. Damit ist die Datenleitung Z bzw. TxD von den ausgehenden Datenleitungen Z und Z_ getrennt. Der Mikrocontroller 20 prüft ("horcht") nun über die Empfangsleitung RxD, ob auf den Datenleitungen Z, Z_ Parametrieranforderungssignale von der Auswerteeinheit anstehen, d. h. ob die Auswerteeinheit eine Parametrierung wünscht bzw. die gespeicherten Parameter prüfen will. Stehen keine Parametrieranforderungen an, so wird diese Prüfung für eine vorgegebene Zeitdauer T fortgesetzt. Ist die Zeitdauer T abgelaufen, ohne dass eine Parametrieranforderung festgestellt wird, so schaltet der Mikrocontroller 20 über die Leitung "Tristate" die Ausgabeeinrichtung 12 durch, so dass die Messwerte von der Messwerterfassung 10 über die Datenleitungen A, B, Z und die Treiber der Ausgabeeinrichtung 12 sowie die ausgehenden Datenleitungen A, A_, B, B_ und Z, Z_ zu der Auswerteeinheit übertragen werden können.

Stellt der Mikrocontroller 20 während der vorgegebenen Zeitdauer T eine Parametrieranforderung auf den Datenleitungen Z, Z_ fest, so schaltet der Mikrocontroller 20 in den Parametriermodus und führt die anstehenden Parameter dem Speicher 18 zu. Der Mikrocontroller 20 hält die Ausgabeeinrichtung 12 dabei solange in dem hochohmigen Zustand, bis das gesamte Datenprotckoll der Parameter übertragen ist. Ein dieses Datenprotokoll abschließender Befehl veranlasst den Mikrocontroller 20 den Parametriermodus zu verlassen und die Ausgabeeinrichtung 12 durchzuschalten, so dass diese die Messwerte der Messwerterfassung 10 an die Auswerteeinheit übertragen kann.

Im Rahmen dieser Parametrieranforderung kann auch eine Abfrage der in dem Speicher 18 abgelegten Parameter durch die Auswerteeinheit erfolgen. Auf einen entsprechenden Befehl schaltet der Mikrocontroller 20 die Ausgabeeinrichtung 12 über die Leitung "Tristate" durch und legt gleichzeitig über den Schalter 22 die Sendeleitung TxD an die Datenleitung Z der Ausgabeeinrichtung 12. Der Mikrocontroller 20 kann nun die in dem Speicher 18 abgelegten Parameter auslesen und über die Sendeleitung TxD, den Schalter 22, die durchgeschaltete Ausgabeeinrichtung 12 und die Datenleitungen Z, Z_ an die Auswerteeinheit übertragen.

## Patentansprüche

1. Verfahren zur Parametrierung einer Messeinrichtung, bei welchem die Messwerte der Messeinrichtung über wenigstens eine Datenleitung übertragen werden und bei welchem Parameter der Messeinrichtung in einem Speicher abgelegt werden, wobei die Parameter dem Speicher über wenigstens eine dieser Datenleitungen zugeführt werden und dass diese Datenleitung zur Zuführung der Parameter für ein definiertes Zeitintervall bezüglich der Übertragung der Messwerte hochohmig geschaltet wird,
wobei
• das Zeitintervall durch das Einschalten der Messeinrichtung gestartet wird,
und
• wenn auf der Datenleitung innerhalb einer vorgegebenen Zeitdauer ein Parametrieranforderungssignal ansteht, dass dann das Zeitintervall durch einen mit den Parametern übertragenen Befehl beendet wird, und
• wenn auf der Datenleitung innerhalb der vorgegebenen Zeitdauer kein Parametrieranforderungssignal ansteht, dass dann das Zeitintervall beendet wird.

2. Verfahren nach Anspruch 1,
**dadurch gekennzeichnet, dass** in dem Speicher abgelegte Parameter aus dem Speicher ausgelesen und auf wenigstens eine der Datenleitungen anstelle der Messwerte aufgeschaltet werden, wobei zumindest diese Datenleitung nicht hochohmig geschaltet ist.

3. Verwendung einer Vorrichtung zur Parametrierung einer Messeinrichtung mit einer Messwerterfassung (10) mit einer Ausgabeeinrichtung (12) zur Übertragung von Messwerten der Messwerterfassung (10) auf Datenleitungen (A, B, Z), mit einem Speicher (18) zum Ablegen von Parametern, mit einem Mikrocontroller (20) und einem in wenigstens einer Datenleitung (Z) vor der Ausgabeeinrichtung (12) angeordneten Schalter (22) zur Durchführung eines Verfahrens nach einem der vorstehenden Ansprüche.

## Claims

1. A method of parameterizing a measuring instrument, in which the measurement values of the measuring instrument are transmitted by way of at least one data line and in which parameters of the measuring instrument are deposited in a memory, wherein the parameters are supplied to the memory by way of at least one of these data lines, and this data line is switched to high resistance in order to supply the parameters for a defined time interval with respect to the transmission of the measurement values, wherein
• the time interval is started by switching on the measuring instrument, and
• if there is a parameterization requirement signal on the data line within a pre-set period of time, then the time interval is terminated by a command transmitted with the parameters, and
• if there is no parameterization requirement signal on the data line within the pre-set period of time, then the time interval is terminated.

2. A method according to claim 1, **characterized in that** parameters deposited in the memory are read out of the memory and are connected to at least one of the data lines instead of the measurement values, wherein at least this data line is not switched to high resistance.

3. Use of an apparatus for parameterizing a measuring instrument with a measurement value detection means (10) with an output device (12) for transmitting measurement values of the measurement value detection
means (10) to data lines (A, B, Z), with a memory (18) for depositing parameters, with a microcontroller (20) and a switch (22) arranged in at least one data line (Z) upstream of the output device (12) for carrying out a method according to one of the preceding claims.

## Revendications

1. Procédé pour paramétrer une installation de mesure selon lequel :
- on transmet les valeurs de mesure de l'installation de mesure par au moins une ligne de transmission de données, et
- on enregistre les paramètres de l'installation de mesure dans une mémoire,
* on fournit les paramètres à la mémoire par l'intermédiaire d'au moins une des lignes de transmission de données, et
- pour fournir les paramètres, on met cette ligne de transmission de données, à un niveau fortement ohmique, pour un intervalle de temps défini pour la transmission des valeurs de mesure,
procédé selon lequel
→ on démarre l'intervalle de temps en branchant l'installation de mesure, et
→ si un signal de requête de paramétrage est appliqué à la ligne de transmission de données à l'intérieur d'une durée prédéfinie, l'intervalle de temps sera terminé avec un ordre transmis avec les paramètres, et
→ si sur la ligne de données, à l'intérieur de la durée prédéfinie, il n'y a aucun signal de requête de paramétrage, on termine l'intervalle de temps.

2. Procédé selon la revendication 1,
**caractérisé en ce qu'**
- on extrait de la mémoire les paramètres qui y sont enregistrés, et
- on les applique à l'une des lignes de transmission de données à la place des valeurs de mesure,
* au moins cette ligne de données n'est pas mise à un niveau fortement ohmique.

3. Application d'un dispositif de paramétrage d'une installation de mesure avec une saisie de valeurs de mesure (10) à l'aide d'une installation d'émission (12) pour transmettre des valeurs de mesure de la saisie de valeurs de mesure (10) sur les lignes de transmission de données (A, B, Z), une mémoire (18) pour recevoir les paramètres, un microcontrôleur (20) et un commutateur (22) installé dans la ligne de transmission de données (Z) en amont de l'installation d'émission (12) pour mettre en oeuvre un procédé selon l'une des revendications précédentes.
